# EUROPÄISCHE PATENTANMELDUNG

(11) **EP 3 524 205 A1**
(43) Veröffentlichungstag der Anmeldung: **14.08.2019**
(21) Anmeldenummer: 18155606.9
(22) Anmeldetag: 07.02.2018
(51) Int. Cl.: A61C 8/00, A61C 13/01, A61C 1/08

(54) **VERBESSERTE FIXIERSTIFTHALTERUNG FÜR ZAHNPROTHESEN UND VERFAHREN ZUR HERSTELLUNG**

(71) Anmelder: Straumann Holding AG, 4052 Basel (CH)
(72) Erfinder: REBIC, Marko, 81737 MUENCHEN (DE)
(74) Vertreter: Modiano, Gabriella Diana

(57) **Zusammenfassung**

Die vorliegende Erfindung betrifft eine verbesserte Fixierstifthalterung (1) für eine Zahnprothese (4), um die Zahnprothese (4) über Fixierstifte, die jeweils durch eine Führungsbohrung in der Fixierstifthalterung (1) schiebbar sind, mit einem Kiefer temporär verbinden zu können. Die verbesserte Fixierstifthalterung (1) umfasst jeweils eine davon separate Führungshülse (2), die temporär auf die Fixierstifthalterung (1) aufsteckbar ist, um durch einen Führungskanal (21) in der Führungshülse (2), mit einem Bohrer präzise geführt die Führungsbohrung in der Fixierstifthalterung (1) einbringen zu können. Danach kann die Führungshülse (2) von der Fixierstifthalterung (1) entfernt werden.

## Beschreibung

Die vorliegende Erfindung betrifft eine verbesserte Fixierstifthalterung für Zahnprothesen, um die Zahnprothese im Mund eines Patienten temporär mit Hilfen jeweiliger Fixierstifte im Kiefer verankern zu können und ein Verfahren zur Herstellung solcher Fixierstifthalterungen.

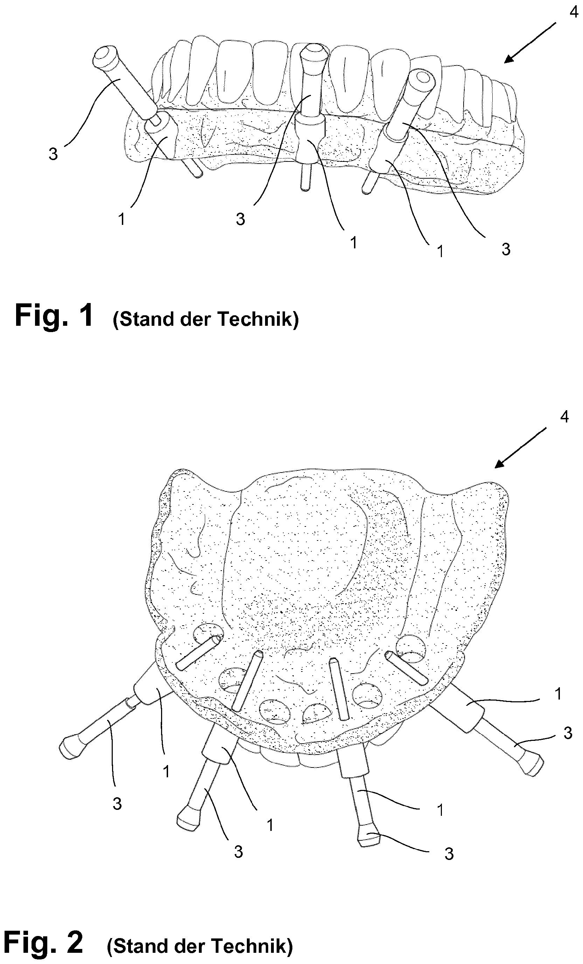

Im Stand der Technik werden Zahnprothesen, wie beispielartig in Fig. 1 und Fig. 2 dargestellt, um diese zu einer Anpassung im Mund des Patienten temporär mit dem Kiefer zu verankern, mit Fixierstifthalterungen versehen, die in der Zahnprothese fest integriert werden und eine Führungsbohrung aufweisen. Durch die jeweilige Führungsbohrung wird dann im Mund des Patienten ein jeweiliger Fixierstift bis in den Kieferknochen hinein vorgeschoben oder hineingeschraubt, um die Zahnprothese temporär mit dem Kiefer zu verankern und dabei die Anpassung beispielsweise von Zahnoberflächen und/oder Ausrichtungen von einzelnen Zahnprothesenteilen entsprechend vornehmen zu können.

Üblicherweise sind die entsprechenden Fixierstifthalterungen mit der Führungsbohrung vorgebohrt ausgebildet, die dann in die Zahnprothese entsprechend eingesetzt oder eingeklebt werden. Die entsprechenden Löcher im Kiefer, in die die Fixierstifte vor der Anpassung eingeschoben oder eingeschraubt werden, sind bevorzugt separat im Kiefer vorbereitet worden.

Oft ist es schwierig, die jeweilige Führungsbohrung in die jeweilige Fixierstifthalterung präzise genug einzubringen, wobei ein Bohrer möglichst präzise und nur entlang der Längsachse der Fixierstifthalterung in die Fixierstifthalterung geführt werden soll. Wenn eine Richtung und Anordnung der Führungsbohrung nicht präzise genug erfolgt, fluchtet später der Fixierstift nicht mit der Bohrung, die schon im Kiefer vorbereitet ist, um den Fixierstift darin aufzunehmen. Deshalb werden auch teilweise schlitzartige Fixierstifthalterungen eingesetzt, für die zunächst nur eine Ausrichtung des Führungsschlitzes präzise vorbestimmt ausgebildet sein muss. In der schlitzartigen Fixierstifthalterung kann das Fixierstift aber nur in einer Dimension gehalten werden, so dass dadurch ein Verlust an präziser Haltesicherheit der Zahnprothese am Kiefer die Folge ist.

Andererseits, wenn gängige hülsenartige Fixierstifthalterungen eingesetzt werden, ist einerseits die Anforderung, dass diese möglichst steif sind, um den Fixierstift möglichst gut und präzise zu führen, andererseits soll die Fixierstifthalterung aber auch nicht zu steif sein, wie beispielsweise aus Metall, damit überstehende Teile davon nach der Anpassung im Mund auch wieder gut abgeschliffen werden können.

Die Aufgabe der Erfindung, um die Nachteile aus dem Stand der Technik zu beseitigen, besteht daher in der Bereitstellung von verbesserten Fixierstifthalterungen für eine Zahnprothese zu einer Fixierung derselben im Mund eines Patienten durch einen jeweiligen Fixierstift, wobei die Führungsbohrungen möglichst präzise und einfach eingebracht werden können und überstehende Teile nach einer Anpassung der Zahnprothese im Mund des Patienten möglichst einfach entfernt werden können sollen. Bevorzugt soll auch ein verbessertes Verfahren zum Herstellen der Zahnprothese mit den Fixierstifthalterungen und zu einem anschließenden Entfernen überstehender Reste, nachdem eine Fixierung und Anpassung im Mund des Patienten vorgenommen ist, bereitgestellt werden.

Die vorstehende Aufgabe wird von einer Vorrichtung und einem Verfahren gemäß den Merkmalen des unabhängigen Anspruchs 1 und den unabhängigen Ansprüchen 11 und 12 gelöst. Weitere vorteilhafte Ausführungsformen der Erfindung sind in den abhängigen Ansprüchen angegeben.

Erfindungsgemäß wird eine Fixierstifthalterung für eine Zahnprothese bereitgestellt, die ausgebildet ist, der Zahnprothese integrierbar oder darin integriert zu sein, um entlang einer jeweiligen Längsachse über einen jeweiligen entsprechenden Fixierstift mit einem Kiefer eines Patienten verbunden werden zu können, der zuvor gebohrte Löcher aufweist, in die der jeweilige Fixierstift, der durch die jeweilige Fixierstifthalterung schiebbar ist, hineinragen kann, um die Zahnprothese dadurch mit dem Kiefer temporär zu verankern, die jeweilige Fixierstifthalterung umfassend:
- einen Basisabschnitt, der ausgebildet ist, mit der Zahnprothese integral verbindbar zu sein oder der einstückig mit der Zahnprothese ist;
- einen Außenadapterabschnitt, der integral mit dem Basisabschnitt verbunden ist und sich entlang der jeweiligen Längsachse vom Basisabschnitt aus mit einer Außenadapterlänge zu einem äußeren Ende hin mit einem Außenadapterquerschnitt erstreckt, wobei das äußere Ende des Außenadapterabschnitts an der Zahnprothese nach außen vom Patienten weg weist; und
- eine Führungshülse, die entlang einer Führungshülsenlängsachse länglich und hülsenartig mit einem inneren Führungskanal, der beidseitig nach außen offen ist, ausgebildet ist und an einem ersten Ende entlang der Führungshülsenlängsachse einen inneren becherartigen Innenadapterabschnitt mit einer Innenadapterlänge und einem Innenadapterquerschnitt aufweist;
- wobei der Innenadapterabschnitt mit der Innenadapterlänge und dem Innenadapterquerschnitt und der Außenadapterabschnitt mit der Außenadapterlänge und dem Außenadapterquerschnitt so zueinander passend ausgebildet sind, dass sie aufeinander steckbar sind und dabei eine Verbindung bilden, die genügend stabil ist, um mit einer vorbestimmten Toleranz durch die Führungshülse hindurch ein Loch in die Fixierstifthalterung bohren zu können, in das der Fixierstift passt.

Ein wesentlicher Vorteil der neuartigen Fixierstifthalterung besteht darin, dass die Fixierstifthalterung einen Außenadapterabschnitt aufweist, der ausgebildet ist, dass darauf die Führungshülse steckbar ist, um durch den Führungskanal der Führungshülse eine entsprechend präzise Bohrung in der Fixierstifthalterung ausführen, wobei eine Führungsbohrung für den jeweiligen Fixierstift gebildet wird.

Vorteilhafterweise kann dabei die Fixierstifthalterung aus einem weicheren Material als die Führungshülse, wie beispielsweise aus einem Kunststoff sein und die Führungshülse beispielsweise aus einem Metall gefertigt sein. Dabei ermöglicht einerseits die Führungshülse, die dementsprechend härter ist, eine gute Stabilität für eine Führung einer Bohrung der Führungsbohrung in der Fixierstifthalterung. Andererseits, indem die Fixierstifthalterung aus einem weicheren Material als die Führungshülse besteht, können nach einer Anpassung der Zahnprothese im Mund des Patienten seitlich überstehende Außenadapterabschnitte leichter entfernt werden, beispielsweise durch Abfräsen oder Abschleifen. Die Verarbeitung bei der Herstellung der Fixierstifthalterung ist also einfacher und präziser geworden, als im Stand der Technik, und das spätere Entfernen der seitlich überstehenden Teile der Fixierstifthalterung, beispielsweise durch Abfräsen oder Abschleifen, die jetzt die Außenadapterabschnitte sind, ist ebenfalls vereinfacht worden. Eine gewisse Länge der Führungsbohrung muss sowieso sein, damit der Fixierstift sicher und schwenksicher gehalten wird und die Führungsbohrung auch nicht ausbricht.

Dadurch dass die Führungshülse die Fixierstifthalterung entlang der Längsachse verlängert, ist eine wesentlich genauere Führung des Bohrers möglich, um die Führungsbohrung in die Fixierstifthalterung einzubringen.

Bevorzugt kann die Führungshülse nach einem Abziehen von der Fixierstifthalterung auch wieder weiterverwendet werden.

Weitere bevorzugt Ausführungsformen sind in der detaillierten Beschreibung und in den abhängigen Ansprüchen offenbart.

Die Verfahren zur Herstellung der Zahnprothese mit den Fixierstifthalterungen gemäß Anspruch 11 und Anspruch 12 zeigen auf, dass die Herstellung durch den Einsatz der Fixierstifthalterungen mit den aufsteckbaren Führungshülsen einfacher und präziser geworden ist, als im Stand der Technik.

Bevorzugte Ausführungsformen gemäß der vorliegenden Erfindung sind in nachfolgenden Zeichnungen und in einer detaillierten Beschreibung dargestellt, sie sollen aber die vorliegende Erfindung nicht ausschließlich darauf begrenzen.

Es zeigen
- Fig. 1: eine perspektivische Ansicht von der Seite einer Zahnprothese, in der gemäß dem Stand der Technik drei Fixierstifthalterungen eingebracht sind, in denen jeweilige Fixierstifte stecken; man erkennt darin nach außen abstehende überstehende Endteile der jeweiligen Fixierstifthalterungen;
- Fig. 2: eine perspektivische Ansicht von unten der Zahnprothese nach Fig. 1, in der gemäß dem Stand der Technik die drei Fixierstifthalterungen eingebracht sind, in denen jeweilige Fixierstifte stecken; man erkennt darin die nach innen zum Kiefer hin, der nicht dargestellt ist, überstehenden Fixierstifte;

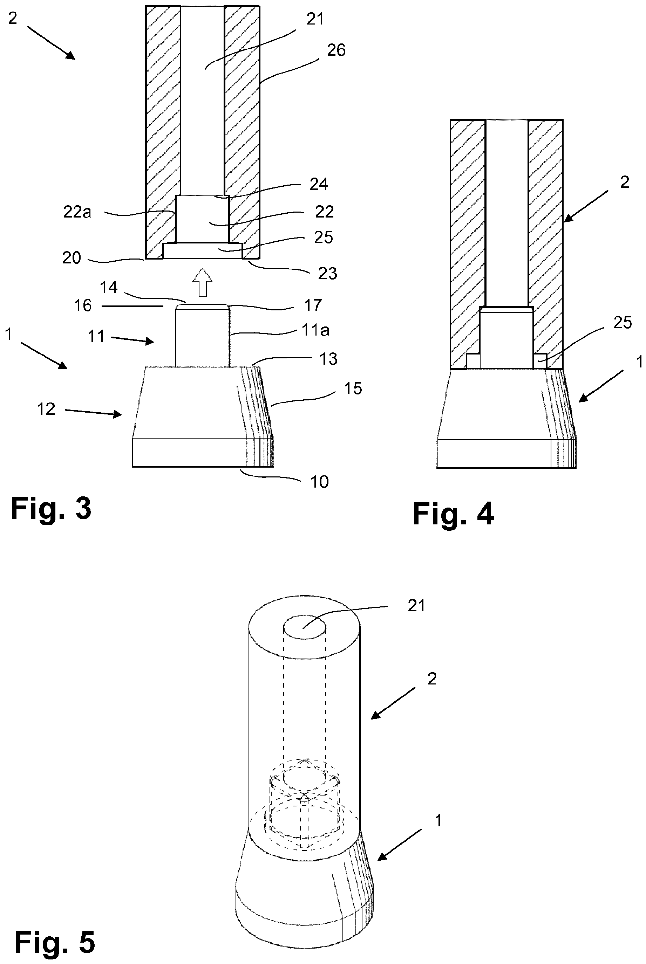

- Fig. 3: eine Seitenschnittansicht einer bevorzugten ersten Ausbildungsform der Fixierstifthalterung einer Führungshülse, die entlang einer gemeinsamen Längsachse direkt über der Fixierstifthalterung aber in einem nichtverbundenen Zustand angeordnet ist, wobei die Fixierstifthalterung einen Innenadapterabschnitt aufweist, der so ausgebildet ist, dass er genau passend auf einen Außenadapterabschnitt der Fixierstifthalterung, der direkt darunter skizziert ist, passt; die Führungshülse weist in einem unteren Endabschnitt des Innenadapterabschnitts eine annulare Aussparung auf, die in Bezug zum dazu passenden Außenadapterabschnitt einen größeren Querschnitt hat;
- Fig. 4: eine Seitenschnittansicht der bevorzugten ersten Ausbildungsform der Fixierstifthalterung und der Führungshülse aus Fig. 3, wobei die Fixierstifthalterung und die Führungshülse nunmehr verbunden sind; angeordnet ist, wobei die Fixierstifthalterung einen Innenadapterabschnitt aufweist, der so ausgebildet ist, dass er genau passend auf einen Außenadapterabschnitt der Fixierstifthalterung, der direkt darunter skizziert ist, passt;
- Fig. 5: eine perspektivische Ansicht der Fixierstifthalterung und der Führungshülse gemäß Fig. 4, die aufeinander gesteckt und damit verbunden sind;
- Fig. 6a: links im Bild eine perspektivische Ansicht und rechts im Bild eine Seitenansicht einer zweiten bevorzugten Fixierstifthalterung mit einem runden Außenadapterquerschnitt;
- Fig. 6b: links im Bild eine perspektivische Ansicht und rechts im Bild eine Seitenansicht einer dritten bevorzugten Fixierstifthalterung mit einem runden Außenadapterquerschnitt;
- Fig. 6c: links im Bild eine perspektivische Ansicht und rechts im Bild eine Seitenansicht einer vierten bevorzugten Fixierstifthalterung mit einem quadratischen Außenadapterquerschnitt und einer abgerundeten Außenadapterstirnkante;
- Fig. 6d: links im Bild eine perspektivische Ansicht und rechts im Bild eine Seitenansicht einer fünften bevorzugten Fixierstifthalterung mit einem hexagonalen Außenadapterquerschnitt; und
- Fig. 7: links im Bild eine perspektivische Ansicht und rechts im Bild eine Seitenansicht einer sechsten bevorzugten Fixierstifthalterung mit einem runden Außenadapterquerschnitt und einer oberen zweiten Stirnfläche, die einen Winkel von 55° zur Längsachse hat.

### Detaillierte Beschreibung von Ausführungsbeispielen

In Fig. 1 aus dem Stand der Technik ist eine Zahnprothese 4 in einer perspektivischen Seitenansicht dargestellt, wobei in der Zahnprothese 4 Fixierstifthalterungen 1 fest darin eingebracht sind und in der jeweiligen Fixierstifthalterung 1 jeweils ein Fixierstift 3 eingesteckt ist. Fig. 2 zeigt die gleiche Zahnprothese 4, wie Fig. 1, mit den darin integrierten Fixierstifthalterungen 1 und Fixierstiften 3 in einer perspektivischen Ansicht von unten. Wie eingangs erwähnt dienen die Fixierstifthalterungen 1, die jeweils eine Führungsbohrung aufweisen, zu einer temporären Befestigung der Zahnprothese 4 in einem Mund des Patienten und genauer am Kiefer des Patienten durch Eintreiben der Fixierungsstifte 3 durch die jeweilige Fixierstifthalterung 1 bis in den Kieferknochen, wo bevorzugt schon entsprechende Löcher vorgebohrt worden sind. Nach einem entsprechenden Einsetzen und temporären Befestigen der Zahnprothese 4 am Kiefer kann die Zahnprothese 4 dem Mund und der restlichen Zahnstruktur des Patienten entsprechend angepasst werden. Nach einer solchen Anpassung wird die Zahnprothese 4 aus dem Mund entnommen, und es werden etwaige an der Zahnprothese 4 seitlich überstehende Abschnitte oder Teile der Fixierstifthalterungen 1 entfernt, beispielsweise durch Abfräsen oder Abschleifen, und die Führungsbohrungen bevorzugt ausgefüllt. Bevorzugt wird die Zahnprothese 4 dann seitlich geglättet und für einen nachfolgenden Dauereinsatz verblendet. Soweit der Stand der Technik.

Die jeweilige Fixierstifthalterung 1 gemäß der vorliegenden Erfindung sind dafür ausgebildet, in eine Zahnprothese 4 integrierbar oder darin schon integriert zu sein, wie beispielsweise durch Einkleben, ein Eingießen, ein integrales Gießen als ein Abdruck oder durch ein gesamtes oder teilweises Ausfräsen aus einem Block oder aus einem Abdruck. Die jeweilige Fixierstifthalterung 1 ist entlang einer jeweiligen Längsachse ausgebildet, um durch die Fixierstifthalterung 1 entlang der Längsachse den Fixierstift 3 hindurchstecken zu können, um eine Verbindung mit dem Kiefer des Patienten herstellen zu können.

Dabei umfasst die erfindungsgemäße Fixierstifthalterung 1, wie sie als eine bevorzugte Ausführungsform in Fig. 3 und 4 dargestellt ist, einen Basisabschnitt 12, der ausgebildet ist, mit der Zahnprothese 4 integral verbindbar zu sein oder der einstückig mit der Zahnprothese 4 ausgebildet ist. Bevorzugt ist der Basisabschnitt 12 dabei rotationssymmetrisch um die Längsachse ausgebildet. Bevorzugt ist der Basisabschnitt 12 entlang der Längsachse von einem ersten Ende 10, das vorbestimmt ist, in der Zahnprothese 4 am nächsten am Kiefer angeordnet zu sein, zu einem zweiten Abschnitt, der seitlich außen an der Zahnprothese 4 zum Vorschein kommt, durch einen zylindrischen Abschnitt und einen anschließenden stumpfkegeligen Abschnitt ausgebildet. Dabei weist der Basisabschnitt 12 eine seitliche erste Mantelfläche 15 auf, die bevorzugt stumpfkegelig ist und sich vom ersten Ende 10 zum zweiten Abschnitt hin verjüngt.

Dabei weist der Basisabschnitt 12 einen Außenadapterabschnitt 11 auf, der integral mit dem Basisabschnitt 12 verbunden ist und sich entlang der Längsachse vom Basisabschnitt 12 aus zu einem äußeren Ende 16 hin mit einer Außenadapterlänge und einen Außenadapterquerschnitt erstreckt. In anderen Worten erstreckt sich der Außenadapterabschnitt 11 vom zweiten Abschnitt des Basisabschnitts 12 aus zum äußeren Ende hin. Der Außenadapterquerschnitt kann dabei sowohl gleichbleibend als aber auch variabel ausgebildet sein. Beispielsweise kann sich der Außenadapterabschnitt 11 vom zweiten Abschnitt zum äußeren Ende 16 hin leicht konisch erstrecken und/oder am äußeren Ende 16 eine umlaufende gerundete obere Kante aufweisen. Bevorzugt ist das Außenadapterabschnitt 11 stab-, bolzen-, stift- oder rohrförmig ausgebildet und weist eine Außenadaptermantelfläche 11a auf. Bevorzugt verläuft die Außenadaptermantelfläche 11a entlang der Außenadapterlänge zumindest teilweise parallel zur Längsachse. Bevorzugt verläuft die Außenadaptermantelfläche 11a entlang der Außenadapterlänge zumindest teilweise in einem Winkel von 0,01 - 0,1° konisch zur Längsachse. Zur Klarheit ist das äußere Ende 16 des Außenadapterabschnitts 11 das Ende, das bei einer Integration in der Zahnprothese 4 am weitesten seitlich außen angeordnet ist.

Zudem weist die Fixierstifthalterung 1 erfindungsgemäß eine dazu separate Führungshülse 2 auf, die entlang einer Führungshülsenlängsachse länglich hülsenartig und mit einem inneren Führungskanal 21, der beidseitig nach außen offen ist, ausgebildet ist. Die Führungshülse 2 weist an einem ersten Ende 20 entlang der Führungshülsenlängsachse einen inneren becherartigen Innenadapterabschnitt 22 auf, der eine Innenadapterlänge und einen Innenadapterquerschnitt aufweist. Der innere becherartige Innenadapterabschnitt 22 weist dabei eine Innenadaptermantelfläche 22a auf. Bevorzugt ist die Innenadaptermantelfläche 22a parallel zur Führungshülsenlängsachse oder mit einer Abweichung dazu von 0,01 - 0,1° ausgebildet. Zur Klarheit ist das erste Ende 20 der Führungshülse 2 dasjenige Ende, das bei einem Zusammenstecken der Führungshülse 2 mit der Fixierstifthalterung 1 mit dem Außenadapterabschnitt 11 als erstes in Berührung kommt.

Dabei sind der Innenadapterabschnitt 22 mit der Innenadapterlänge und dem Innenadapterquerschnitt und der Außenadapterabschnitt 11 mit der Außenadapterlänge und dem Außenadapterquerschnitt so zueinander passend ausgebildet, dass sie genau passend aufeinander steckbar sind und dabei eine Verbindung bilden. Die Passung zwischen dem Innenadapterabschnitt 22 und dem Außenadapterabschnitt 11 ist bevorzugt eine Presspassung oder eine Passung mit einem Spiel von bevorzugt 0-100 µm oder weiter bevorzugt von 0-50 µm oder noch weiter bevorzugt von 0-30 µm oder noch weiter bevorzugt von 10-30 µm. Die Passung zwischen dem Innenadapterabschnitt 22 und dem Außenadapterabschnitt 11 ist dabei ausgebildet, genügend stabil zu sein, um mit einer vorbestimmten Toleranz durch die Führungshülse 2 hindurch ein Loch in die Fixierstifthalterung 1 bohren zu können, in das der Fixierstift 3 passt. Bevorzugt ist die Toleranz kleiner als +/- 0,5°.

Bevorzugt ist die Fixierstifthalterung 1 aus einem weicheren Material als die Führungshülse 2 ausgebildet. Bevorzugt ist die Fixierstifthalterung 1 aus einem Kunststoff und die Führungshülse 2 aus einem Metall ausgebildet.

Bevorzugt weisen der Innenadapterabschnitt 22 und der Außenadapterabschnitt 11 zueinander jeweils eine solche Passung auf, dass sie nach einem aufeinander gesteckten Zustand wieder voneinander lösbar sind.

Bevorzugt ist der Basisabschnitt 12 der Fixierstifthalterung 1 mit der Zahnprothese 4 integral verbunden oder darin eingegossen oder eingeschraubt oder eingeklebt. Alternativ bevorzugt ist die Fixierstifthalterung 1 mit der Zahnprothese 4 aus einem Basismaterial ausgefräst oder ausgegossen.

Bevorzugt ist die Fixierstifthalterung 1 auf dem Basisabschnitt 12 annular um den Außenadapterabschnitt 11 herum, der sich aus dem Basisabschnitt 12 heraus erstreckt, eine erste Stirnfläche 13 ausgebildet, die sich annular um die Längsachse herum mit einem ersten Winkel zur Längsachse hin erstreckt. Bevorzugt erstreckt sich die erste Stirnfläche 13 annular um die Längsachse vom Außenadapterabschnitt 11 bis zu einer seitlichen ersten Mantelfläche 15 des Basisabschnitts 12. Bevorzugt weist die Führungshülse 2 dabei eine um die Führungshülsenlängsachse annulare dritte Stirnfläche 23 auf, die am ersten Ende 20 der Führungshülse 2 zwischen einer zweiten äußeren Mantelfläche 26 der Führungshülse 2 und dem Innenadapterabschnitt 22 mit dem ersten Winkel zur Führungshülsenlängsachse gebildet ist. Dabei sind die erste Stirnfläche 13 und die dritte Stirnfläche 23 so zueinander ausgebildet, dass sie in dem aufeinander gesteckten Zustand der Führungshülse 2 auf der Fixierstifthalterung 1 aufeinander liegen und einen vorbestimmten Anschlag zueinander bilden.

Allgemein ist die Längsachse der Fixierstifthalterung 1 bevorzugt koaxial mit der Führungshülsenlängsachse der Führungshülse 2.

Bevorzugt weist die Führungshülse 2 am ersten Ende 20 eine Aussparung 25 auf, die um die Führungshülsenlängsachse herum zwischen der dritten Stirnfläche 23 und dem Innenadapterabschnitt 22 annular so ausgebildet ist, dass die Aussparung einen äußeren Randbereich des Innenadapterabschnitts 22 am ersten Ende 20 um eine Aussparungsbreite erweitert, so dass die Aussparung 25 in dem aufeinander gesteckten Zustand zwischen der Führungshülse 2 und der Fixierstifthalterung 1 einen Hohlraum zwischen der Führungshülse 2 und der Fixierstifthalterung 1 bildet. Der Hohlraum hat dabei senkrecht zur Führungshülsenlängsachse die Aussparungsbreite und hat eine Aussparungstiefe entlang der Führungshülsenlängsachse, die kleiner als die Innenadapterlänge ist. Bevorzugt ist die Aussparungstiefe 0,1 -1 mm oder weiter bevorzugt 0,1 - 0,5 mm. Die Aussparung 25 dient dazu eine meist fertigungstechnisch bedingte Schräge oder Fase des Außenadapterabschnitts 11 zu der ersten Stirnfläche 13 hin darin aufzunehmen, um den Anschlag zwischen der ersten 13 und der dritten Stirnfläche zu gewährleisten.

Bevorzugt weist die Fixierstifthalterung 1 am äußeren Ende 16 des Außenadapterabschnitts 11 eine zweite Stirnfläche 14 auf, die einen zweiten Winkel zur Längsachse aufweist. Dabei hat die Führungshülse 2 bevorzugt eine vierte Stirnfläche 24, die absatzartig zwischen dem Innenadapterabschnitt 22 und dem Führungskanal 21 mit dem zweiten Winkel zur Führungshülsenlängsachse hin ausgebildet ist. Dabei sind die zweite Stirnfläche 14 und die vierte Stirnfläche 24 so zueinander ausgebildet, dass sie in dem aufeinander gesteckten Zustand der Führungshülse 2 auf der Fixierstifthalterung 1 aufeinander liegen und einen vorbestimmten Anschlag zueinander bilden.

Bevorzugt ist der erste Winkel zur Längsachse und zur Führungshülsenlängsachse ein rechter Winkel oder ein Winkel in einem Bereich von 60-90°.

Bevorzugt ist der zweite Winkel zur Längsachse und zur Führungshülsenlängsachse ein rechter Winkel oder ein Winkel in einem Bereich von 60-90° oder von 30-60°.

Bevorzugt sind die Fixierstifthalterung 1 und die Führungshülse 2 ausgebildet, in dem aufeinander gesteckten Zustand sich ausschließlich durch die Bereiche des Außenadapterabschnitts 11, des Innenadapterabschnitts 22 und/oder durch die erste 13, die zweite 14, die dritte 23 und/oder die vierte Stirnfläche 24 zu berühren. Bevorzugt bleibt in dem aufeinander gesteckten Zustand die erste Mantelfläche 15 der Fixierstifthalterung 1 von der Führungshülse 2 unberührt.

Bevorzugt weist der Außenadapterabschnitt 11 an einem Übergang zwischen der zweiten Stirnfläche 14 zur Außenadaptermantelfläche 11a eine Außenadapterstirnkante 17 auf, die eine Abrundung oder eine Fase an der zweiten Stirnfläche 14 bildet, um die Führungshülse 2 besser und selbstfindender auf den Außenadapterabschnitt 11 stecken zu können. Bevorzugt sind weitere Ecken oder Kanten des Außenadapterabschnitts 11 entlang der Außenadaptermantelfläche 11a gerundet oder mit mindestens einer Fase ausgebildet, um den Innenadapterabschnitt 22 besser auf den Außenadapterabschnitt 11 schieben zu können.

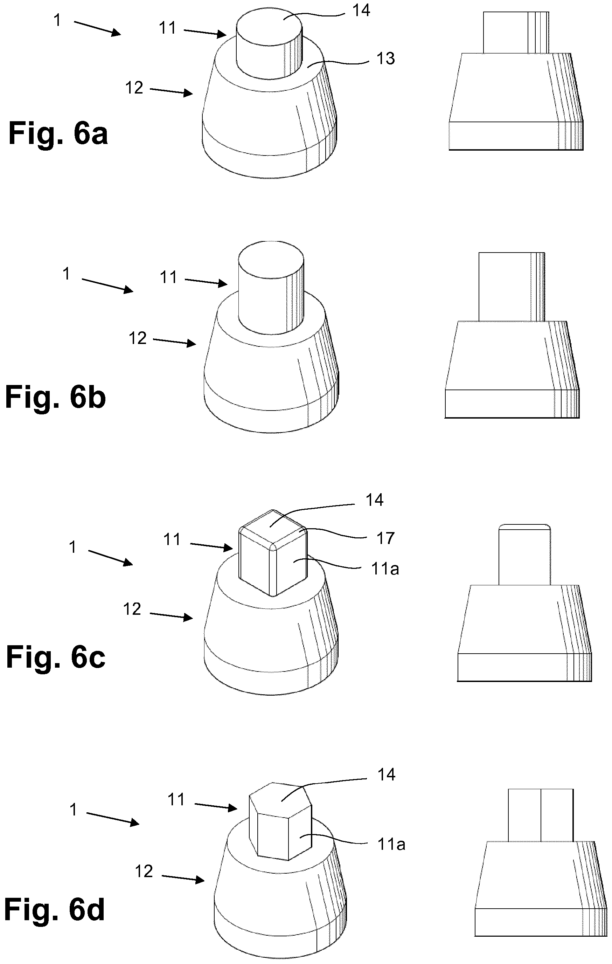

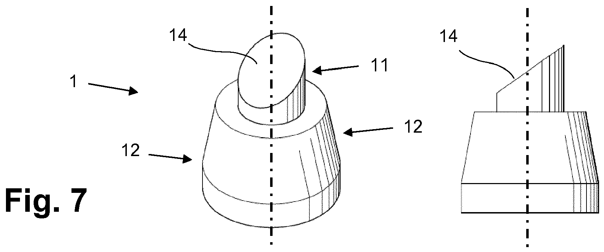

Bevorzugt sind der Außenadapterquerschnitt und dementsprechend der Innenadapterquerschnitt um die Längsachse und Führungshülsenlängsachse verdrehsicher zueinander ausgebildet, um eine Verdrehsicherung zwischen der Fixierstifthalterung 1 und der Führungshülse 2 zu bilden. Dabei kann der Außenadapterquerschnitt und der Innenadapterquerschnitt entlang der Längsachse und Führungshülsenlängsachse nur teilweise oder auf der gesamten Außenadapterlänge eine Verdrehsicherung aufweisen. Die Verdrehsicherung kann dabei beispielsweise durch eine quadratische, rechteckige, ovale oder polygonale Form des jeweiligen Querschnitts gebildet sein. Beispielsweise kann auch eine Keilwellenverbindung zwischen der Außenadaptermantelfläche 11a und der Innenadaptermantelfläche 22a gebildet sein. Alternativ oder zusätzlich kann die Verdrehsicherung gebildet werden, indem die zweite Stirnfläche 14 und die vierte Stirnfläche 24 zur Längsachse und zur Führungshülsenlängsachse schräg ausgebildet werden; Fig. 7 zeigt dazu eine bevorzugte Ausbildungsform der Fixierstifthalterung 1, worin die zweite Stirnfläche 14 die Längsachse schräg schneidet. Bevorzugte Ausbildungsformen der Fixierstifthalterungen 1 mit polygonalen Außenadapterquerschnitten als Verdrehsicherung sind als Beispiele in Fig. 6c und Fig. 6d dargestellt. Dahingegen weisen die bevorzugten Ausbildungsformen der Fixierstifthalterungen 1 in Fig. 6a und Fig. 6b keinen Außenadapterquerschnitt mit Verdrehsicherung auf.

Ein Verfahren zur Herstellung des jeweiligen Lochs in der jeweiligen Fixierstifthalterung 1, die in einer Zahnprothese 4 integrierbar ist, weist folgende konsekutive Schritte auf:
Bereitstellen der jeweiligen Fixierstifthalterung 1, die dazu ausgebildet ist, in der Zahnprothese 4 integrierbar zu sein und um nach einem Nachbearbeitungsschritt einer Aufnahme eines jeweiligen entsprechenden Fixierstifts 3 zu dienen, der im Mund eines Patienten durch die Fixierstifthalterung 1 hindurch in den Kiefer hinein bewegbar ist, um die Zahnprothese 4 mit dem Kiefer zu verbinden, wobei die Fixierstifthalterung 1 einen Basisabschnitt 12 und einen Außenadapterabschnitt 11 aufweist und der Außenadapterabschnitt 11 entlang einer Längsachse mit einem Außenadapterquerschnitt und einer Außenadapterlänge sich nach außen vom Kiefer weg erstreckt;

Bereitstellen einer Führungshülse 2, die entlang einer Führungshülsenlängsachse als ein längliches hülsenartiges Teil mit einem inneren Führungskanal 21, der beidseitig nach außen offen ist, ausgebildet ist und an einem ersten Ende 20 entlang der Führungshülsenlängsachse einen inneren becherartigen Innenadapterabschnitt 22 aufweist, der aufsteckbar passend zum Außeradapterabschnitt 11 ausgebildet ist;

Integration der mindestens einen Fixierstifthalterung 1 in der Zahnprothese 4;

Aufstecken der jeweiligen Führungshülse 2 auf die jeweilige Fixierstifthalterung 1 bis zu einem vorbestimmten Anschlag zwischen der jeweiligen Führungshülse 2 und der jeweiligen Fixierstifthalterung 1;

Einführen eines Bohrers durch den inneren Führungskanal 21 der Führungshülse 2 und Bohren einer Führungsbohrung durch die Fixierstifthalterung 1 als dem Nachbearbeitungsschritt, um durch die zweite Führungsbohrung ein nachfolgendes Hindurchbewegen des Fixierstifts 3 zu ermöglichen;

Nach dem jeweiligen Bohren der jeweiligen Führungsbohrung, Abziehen der jeweiligen Führungshülse 2 von der jeweiligen Fixierstifthalterung 1;

Nach einer bevorzugten Anpassung der Zahnprothese 4: Entfernen, beispielsweise durch Abfräsen oder Abschleifen, mindestens der seitlich nach außen abstehenden Außenadapterabschnitte 12 der jeweiligen Fixierstifthalterung 1, zu einer anschließenden weiteren Verwendung im Mund des Patienten.

Die Anpassung der Zahnprothese 4 wird dabei bevorzugt durch ein temporäres Einsetzen und Fixieren der Zahnprothese 4 im Mund des Patienten durch die Fixierstifte 3 und Anpassen der Zahnprothese 4 im Mund des Patienten vorgenommen. Danach folgen bevorzugt die Schritte: Entnehmen der Zahnprothese 4 aus dem Mund des Patienten und Entfernen, beispielsweise durch Abfräsen oder Abschleifen, mindestens der seitlich nach außen abstehenden Außenadapterabschnitte 12 der jeweiligen Fixierstifthalterung 1, zu einer anschließenden weiteren Verwendung im Mund des Patienten.

Ein alternatives Verfahren zur Herstellung des jeweiligen Lochs in der jeweiligen Fixierstifthalterung 1, die schon in einer Zahnprothese 4 integriert ist, weist folgende konsekutive Schritte auf:
Herstellen der Zahnprothese 4 mit darin eingegossenen oder ausgefrästen jeweiligen Fixierstifthalterungen 1, die dazu ausgebildet sind, nach einem Nachbearbeitungsschritt einer Aufnahme eines jeweiligen entsprechenden Fixierstifts 3 zu dienen, der im Mund eines Patienten durch die jeweilige Fixierstifthalterung 1 hindurch in den Kiefer schiebbar ist, um die Zahnprothese 4 mit dem Kiefer zu verbinden, wobei die Fixierstifthalterung 1 einen Basisabschnitt 12 und einen Außenadapterabschnitt 11 aufweist und der Außenadapterabschnitt 11 entlang einer Längsachse mit einem Außenadapterquerschnitt und einer Außenadapterlänge sich nach außen vom Kiefer weg erstreckt;

Bereitstellen einer Führungshülse 2, die entlang einer Führungshülsenlängsachse als ein längliches hülsenartiges Teil mit einem inneren Führungskanal 21, der beidseitig nach außen offen ist, ausgebildet ist und an einem ersten Ende 20 entlang der Führungshülsenlängsachse einen inneren becherartigen Innenadapterabschnitt 22 aufweist, der aufsteckbar passend zum Außeradapterabschnitt 11 ausgebildet ist;

Aufstecken der jeweiligen Führungshülse 2 auf die jeweilige Fixierstifthalterung 1 bis zu einem vorbestimmten Anschlag zwischen der jeweiligen Führungshülse 2 und der jeweiligen Fixierstifthalterung 1;

Einführen eines Bohrers durch den inneren Führungskanal 21 der Führungshülse 2 und Bohren einer Führungsbohrung durch die Fixierstifthalterung 1 als dem Nachbearbeitungsschritt, um durch die Führungsbohrung ein nachfolgendes Hindurchbewegen des Fixierstifts 3 zu ermöglichen;

Nach dem jeweiligen Bohren der jeweiligen Führungsbohrung, Abziehen der jeweiligen Führungshülse 2 von der jeweiligen Fixierstifthalterung 1;

Nach einer bevorzugten Anpassung der Zahnprothese 4: Entfernen, beispielsweise durch Abfräsen oder Abschleifen, mindestens der seitlich nach außen abstehenden Außenadapterabschnitte 12 der jeweiligen Fixierstifthalterung 1, zu einer anschließenden weiteren Verwendung im Mund des Patienten.

Die Anpassung der Zahnprothese 4 wird dabei bevorzugt durch ein temporäres Einsetzen und Fixieren der Zahnprothese 4 im Mund des Patienten durch die Fixierstifte 3 und Anpassen der Zahnprothese 4 im Mund des Patienten vorgenommen. Danach folgen bevorzugt die Schritte: Entnehmen der Zahnprothese 4 aus dem Mund des Patienten und Entfernen, beispielsweise durch Abfräsen oder Abschleifen, mindestens der seitlich nach außen abstehenden Außenadapterabschnitte 12 der jeweiligen Fixierstifthalterung 1, zu einer anschließenden weiteren Verwendung im Mund des Patienten.

Ein besonderer Vorteil der beiden oben beschriebenen Verfahren ist, dass die Führungsbohrungen in den Fixierstifthalterungen 1 besser durch die temporär aufgesteckten Führungshülsen 2 gebohrt werden können, als ohne die Führungshülsen 2. Dadurch können die Führungsbohrungen in den Fixierstifthalterungen 1 sowohl genauer gebohrt werden, und es können anschließend, wenn die Führungsbohrungen nicht mehr gebraucht werden, die außen abstehenden Enden der Fixierstifthalterungen 1 besser und schneller entfernt werden.

Zur Klarheit ist der Führungskanal 21 ausgebildet, um durch den Führungskanal 21 im aufgesteckten Zustand zwischen der Führungshülse 2 und dem Fixierstifthalterung 1 einen Bohrer zu führen, um in die Fixierstifthalterung 1 die Führungsbohrung vorbestimmt einbringen zu können.

Zur Klarheit wird festgehalten, dass die Fixierstifthalterung 1 die Führungsbohrung in einem ersten Zustand nicht aufweist, und die Fixierstifthalterung 1 die Führungsbohrung erst dann aufweist, nachdem die Führungshülse 2 auf der Fixierstifthalterung 1 aufgesetzt worden ist und die Führungsbohrung durch einen Bohrer, der durch die Führungshülse 2 geführt wird, in die Fixierstifthalterung 1 gebohrt worden ist. Danach wird die Führungshülse 2 auf der Fixierstifthalterung 1 bevorzugt nicht mehr gebraucht und davon bevorzugt entfernt.

Zur Klarheit wird unter "passen" verstanden, dass die Führungshülse 2 mit festem Sitz passgenau auf die Fixierstifthalterung 1 steckbar ist und davon auch wieder abnehmbar ist. Bevorzugt sind die Führungshülsen 2 nach dem aufgesteckten Zustand manuell von der jeweiligen Fixierstifthalterung 1 abnehmbar.

Zur Klarheit werden unter den Merkmalen "oben" und "unten" relative Ortsangaben in senkrechter Richtung verstanden, so wie in den Figuren dargestellt. Zur Klarheit werden unter den Merkmalen "seitlich", "seitliche", etc. relative Ortsangaben in waagerechter Richtung verstanden, so wie in den Figuren dargestellt.

Zur Klarheit sei auch angemerkt, dass unbestimmte Artikel in Verbindung mit einem Gegenstand oder Zahlenangaben, wie beispielsweise "ein" Gegenstand den Gegenstand nicht auf zahlenmäßig genau einen Gegenstand begrenzt sondern, dass damit gemeint ist, dass mindestens "ein" Gegenstand damit gemeint ist. Dies gilt für alle unbestimmten Artikel wie beispielsweise "ein", "eine" usw.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die In den Ansprüchen genannten Bezugszeichen dienen nur der besseren Verständlichkeit und beschränken die Ansprüche in keiner Weise auf die in den Figuren dargestellten Formen.

### Bezuaszeichenliste

- 1: Fixierstifthalterung
- 10: erstes Ende der Fixierstifthalterung
- 11: Außenadapterabschnitt
- 11a: Außenadaptermantelfläche
- 12: Basisabschnitt
- 13: erste Stirnfläche
- 14: zweite Stirnfläche
- 15: erste Mantelfläche
- 16: äußeres Ende
- 17: Außenadapterstirnkante
- 2: Führungshülse, die eine Fixierstiftführungshülse ist
- 20: erstes Ende der Führungshülse
- 21: Führungskanal
- 22: Innenadapterabschnitt
- 22a: Innenadaptermantelfläche
- 23: dritte Stirnfläche
- 24: vierte Stirnfläche
- 25: Aussparung
- 26: zweite Mantelfläche
- 3: Fixierstift
- 4: Zahnprothese

## Patentansprüche

1. Fixierstifthalterung (1), die dafür ausgebildet ist, in eine Zahnprothese (4) integrierbar oder darin integriert zu sein, um entlang einer jeweiligen Längsachse über einen jeweiligen entsprechenden Fixierstift (3) mit einem Kiefer eines Patienten verbunden werden zu können, der zuvor gebohrte Löcher aufweist, in die der jeweilige Fixierstift (3), der durch die jeweilige Fixierstifthalterung (1) schiebbar ist, hineinragen kann, um die Zahnprothese (4) dadurch mit dem Kiefer temporär zu verankern, die jeweilige Fixierstifthalterung (1) umfassend:
a) einen Basisabschnitt (12), der ausgebildet ist, mit der Zahnprothese (4) integral verbindbar zu sein oder der einstückig mit der Zahnprothese (4) ist;
b) einen Außenadapterabschnitt (11), der integral mit dem Basisabschnitt (12) verbunden ist und sich entlang der jeweiligen Längsachse vom Basisabschnitt (12) aus mit einer Außenadapterlänge zu einem äußeren Ende (16) hin mit einem Außenadapterquerschnitt erstreckt, wobei das äußere Ende (16) des Außenadapterabschnitts (11) an der Zahnprothese (4) nach außen vom Patienten weg weist; und
c) eine Führungshülse (2), die entlang einer Führungshülsenlängsachse länglich und hülsenartig mit einem inneren Führungskanal (21), der beidseitig nach außen offen ist, ausgebildet ist und an einem ersten Ende (20) entlang der Führungshülsenlängsachse einen inneren becherartigen Innenadapterabschnitt (22) mit einer Innenadapterlänge und einem Innenadapterquerschnitt aufweist;
d) wobei der Innenadapterabschnitt (22) mit der Innenadapterlänge und dem Innenadapterquerschnitt und der Außenadapterabschnitt (11) mit der Außenadapterlänge und dem Außenadapterquerschnitt so zueinander passend ausgebildet sind, dass sie aufeinander steckbar sind und dabei eine Verbindung bilden, die genügend stabil ist, um mit einer vorbestimmten Toleranz durch die Führungshülse (2) hindurch ein Loch in die Fixierstifthalterung (1) bohren zu können, in das der Fixierstift (3) passt.

2. Fixierstifthalterung (1) gemäß Anspruch 1, wobei die Fixierstifthalterung (1) aus einem Kunststoff und die Führungshülse (2) aus einem Metall ausgebildet sind.

3. Fixierstifthalterung (1) gemäß Anspruch 1 oder 2, wobei der Innenadapterabschnitt (22) und der Außenadapterabschnitt (11) so zueinander passend ausgebildet sind, dass sie nach einem aufeinander gesteckten Zustand wieder voneinander lösbar sind.

4. Fixierstifthalterung (1) gemäß einem oder mehreren der vorstehenden Ansprüche, wobei der Basisabschnitt (12) der Fixierstifthalterung (1) mit der Zahnprothese (4) integral verbunden ist oder darin eingegossen oder eingeschraubt, eingeklebt ist oder der zusammen mit mindestens einem anderen Teil der Zahnprothese (4) zusammen aus einem Basismaterial ausgefräst oder ausgegossen ist.

5. Fixierstifthalterung (1) gemäß einem oder mehreren der vorstehenden Ansprüche, wobei die Fixierstifthalterung (1) auf dem Basisabschnitt (12) annular um den Außenadapterabschnitt (11) herum, der sich aus dem Basisabschnitt (12) heraus erstreckt, eine erste Stirnfläche (13) mit einem ersten Winkel zur Längsachse hin aufweist, und die Führungshülse (2) eine um die Führungshülsenlängsachse annulare dritte Stirnfläche (23) aufweist, die am ersten Ende (20) der Führungshülse (2) zwischen einer zweiten Mantelfläche (26) und dem Innenadapterabschnitt (22) mit dem ersten Winkel zur Führungshülsenlängsachse gebildet ist, wobei die erste Stirnfläche (13) und die dritte Stirnfläche (23) so zueinander ausgebildet sind, dass sie in dem aufeinander gesteckten Zustand der Führungshülse (2) auf der Fixierstifthalterung (1) aufeinander liegen und einen vorbestimmten Anschlag zueinander bilden.

6. Fixierstifthalterung (1) gemäß Anspruch 5, wobei die Führungshülse (2) am ersten Ende (20) eine Aussparung (25) aufweist, die um die Führungshülsenlängsachse herum zwischen der dritten Stirnfläche (23) und dem Innenadapterabschnitt (22) annular so ausgebildet ist, dass die Aussparung einen äußeren Randbereich des Innenadapterabschnitts (22) am ersten Ende (20) um eine Aussparungsbreite erweitert, so dass die Aussparung (25) in dem aufeinander gesteckten Zustand zwischen der Führungshülse (2) und der Fixierstifthalterung (1) einen Hohlraum mit einer annularen Weite und eine Tiefe entlang der Führungshülsenlängsachse, die kleiner als die Innenadapterlänge ist.

7. Fixierstifthalterung (1) gemäß einem oder mehreren der vorstehenden Ansprüche, wobei die Fixierstifthalterung (1) am äußeren Ende (16) des Außenadapterabschnitts (11) eine zweite Stirnfläche (14) mit einem zweiten Winkel zur Längsachse aufweist, und die Führungshülse (2) eine vierte Stirnfläche (24) aufweist, die absatzartig zwischen dem Innenadapterabschnitt (22) und dem Führungskanal (21) mit dem zweiten Winkel zur Führungshülsenlängsachse gebildet wird, wobei die zweite Stirnfläche (14) und die vierte Stirnfläche (24) so zueinander ausgebildet sind, dass sie in dem aufeinander gesteckten Zustand der Führungshülse (2) auf der Fixierstifthalterung (1) aufeinander liegen und einen vorbestimmten Anschlag zueinander bilden.

8. Fixierstifthalterung (1) gemäß einem oder mehreren der vorstehenden Ansprüche, wobei der erste Winkel zur Längsachse und zur Führungshülsenlängsachse ein rechter Winkel oder ein Winkel in einem Bereich von 60-90° ist; und/oder
wobei der zweite Winkel zur Längsachse und zur Führungshülsenlängsachse ein rechter Winkel oder ein Winkel in einem Bereich von 60-90° oder von 30-60° ist.

9. Fixierstifthalterung (1) gemäß einem oder mehreren der vorstehenden Ansprüche, wobei die Fixierstifthalterung (1) und die Führungshülse (2) ausgebildet sind, in dem aufeinander gesteckten Zustand sich ausschließlich durch die Bereiche des Außenadapterabschnitts (11), des Innenadapterabschnitts (22) und/oder durch die erste (13), die zweite (14), die dritte (23) und/oder die vierte Stirnfläche (24) zu berühren.

10. Fixierstifthalterung (1) gemäß einem oder mehreren der vorstehenden Ansprüche, wobei der Außenadapterquerschnitt und dementsprechend der Innenadapterquerschnitt um die Längsachse und Führungshülsenlängsachse verdrehsicher zueinander oder quadratisch oder oval oder sternförmig oder vieleckig oder vieleckig mit gerundeten Ecken ausgebildet sind, um eine Verdrehsicherung zwischen der Fixierstifthalterung (1) und der Führungshülse (2) zu bilden.

11. Verfahren zur Herstellung eines jeweiligen Lochs in einer jeweiligen Fixierstifthalterung (1), die in einer Zahnprothese (4) integrierbar ist, folgende Schritte umfassend:
a) Bereitstellen der jeweiligen Fixierstifthalterung (1), die dazu ausgebildet ist, in der Zahnprothese (4) integrierbar zu sein und um nach einem Nachbearbeitungsschritt einer Aufnahme eines jeweiligen entsprechenden Fixierstifts (3) zu dienen, der im Mund eines Patienten durch die Fixierstifthalterung (1) hindurch in den Kiefer hinein bewegbar ist, um die Zahnprothese (4) mit dem Kiefer zu verbinden, wobei die Fixierstifthalterung (1) einen Basisabschnitt (12) und einen Außenadapterabschnitt (11) aufweist und der Außenadapterabschnitt (11) entlang einer Längsachse mit einem Außenadapterquerschnitt und einer Außenadapterlänge sich nach außen vom Kiefer weg erstreckt;
b) Bereitstellen einer Führungshülse (2), die entlang einer Führungshülsenlängsachse als ein längliches hülsenartiges Teil mit einem inneren Führungskanal (21), der beidseitig nach außen offen ist, ausgebildet ist und an einem ersten Ende (20) entlang der Führungshülsenlängsachse einen inneren becherartigen Innenadapterabschnitt (22) aufweist, der aufsteckbar passend zum Außeradapterabschnitt (11) ausgebildet ist;
c) Integration der mindestens einen Fixierstifthalterung (1) in der Zahnprothese (4);
d) Aufstecken der jeweiligen Führungshülse (2) auf die jeweilige Fixierstifthalterung (1) bis zu einem vorbestimmten Anschlag zwischen der jeweiligen Führungshülse (2) und der jeweiligen Fixierstifthalterung (1);
e) Einführen eines Bohrers durch den inneren Führungskanal (21) der Führungshülse (2) und Bohren einer Führungsbohrung durch die Fixierstifthalterung (1) als dem Nachbearbeitungsschritt, um durch die zweite Führungsbohrung ein nachfolgendes Hindurchbewegen des Fixierstifts (3) zu ermöglichen;
f) Nach dem jeweiligen Bohren der jeweiligen Führungsbohrung, Abziehen der der jeweiligen Führungshülse (2) von der jeweiligen Fixierstifthalterung (1);
g) Nach einer Anpassung der Zahnprothese (4) Entfernen mindestens der seitlich nach außen abstehenden Außenadapterabschnitte (12) der jeweiligen Fixierstifthalterung (1), zu einer anschließenden weiteren Verwendung im Mund des Patienten.

12. Verfahren zur Herstellung eines jeweiligen Lochs in einer jeweiligen Fixierstifthalterung (1), die in einer Zahnprothese (4) integriert ist, folgende Schritte umfassend:
a) Herstellen der Zahnprothese (4) mit darin eingegossenen oder ausgefrästen jeweiligen Fixierstifthalterungen (1), die dazu ausgebildet sind, nach einem Nachbearbeitungsschritt einer Aufnahme eines jeweiligen entsprechenden Fixierstifts (3) zu dienen, der im Mund eines Patienten durch die jeweilige Fixierstifthalterung (1) hindurch in den Kiefer schiebbar ist, um die Zahnprothese (4) mit dem Kiefer zu verbinden, wobei die Fixierstifthalterung (1) einen Basisabschnitt (12) und einen Außenadapterabschnitt (11) aufweist und der Außenadapterabschnitt (11) entlang einer Längsachse mit einem Außenadapterquerschnitt und einer Außenadapterlänge sich nach außen vom Kiefer weg erstreckt;
b) Bereitstellen einer Führungshülse (2), die entlang einer Führungshülsenlängsachse als ein längliches hülsenartiges Teil mit einem inneren Führungskanal (21), der beidseitig nach außen offen ist, ausgebildet ist und an einem ersten Ende (20) entlang der Führungshülsenlängsachse einen inneren becherartigen Innenadapterabschnitt (22) aufweist, der aufsteckbar passend zum Außeradapterabschnitt (11) ausgebildet ist;
c) Aufstecken der jeweiligen Führungshülse (2) auf die jeweilige Fixierstifthalterung (1) bis zu einem vorbestimmten Anschlag zwischen der jeweiligen Führungshülse (2) und der jeweiligen Fixierstifthalterung (1);
d) Einführen eines Bohrers durch den inneren Führungskanal (21) der Führungshülse (2) und Bohren einer Führungsbohrung durch die Fixierstifthalterung (1) als dem Nachbearbeitungsschritt, um durch die Führungsbohrung ein nachfolgendes Hindurchbewegen des Fixierstifts (3) zu ermöglichen;
e) Nach dem jeweiligen Bohren der jeweiligen Führungsbohrung, Abziehen der der jeweiligen Führungshülse (2) von der jeweiligen Fixierstifthalterung (1);
f) Nach einer Anpassung der Zahnprothese (4) Entfernen mindestens der seitlich nach außen abstehenden Außenadapterabschnitte (12) der jeweiligen Fixierstifthalterung (1), zu einer anschließenden weiteren Verwendung im Mund des Patienten.
